# EUROPÄISCHE PATENTSCHRIFT

(11) **EP 1 053 895 B1**
(45) Veröffentlichungstag und Bekanntmachung des Hinweises auf die Patenterteilung: **12.07.2006**
(21) Anmeldenummer: 00109398.8
(22) Anmeldetag: 03.05.2000
(51) Int. Cl.: B60G 15/14, F16F 9/05, B60G 11/27

(54) **Gasfeder für ein lenkbares Fahrzeugrad**
Gas spring for a steerable vehicle wheel
Ressort à gaz pour un roue directrice de véhicule

(30) Priorität: 18.05.1999 DE 19922798
(43) Veröffentlichungstag der Anmeldung: 22.11.2000
(73) Patentinhaber: Bayerische Motoren Werke Aktiengesellschaft, 80809 München (DE)
(72) Erfinder: Joseph, Adrian, 85283 Wolnzach-Geroldshausen (DE)

(56) Entgegenhaltungen:
- DE-C- 19 607 804
- DE-U- 8 619 266
- FR-A- 2 559 430
- US-A- 4 655 438
- US-A- 5 678 810
- PATENT ABSTRACTS OF JAPAN Bd. 014, Nr. 237 (M-0976), 21. Mai 1990 (1990-05-21) & JP 02 063908 A (MAZDA MOTOR CORP), 5. März 1990 (1990-03-05)
- PATENT ABSTRACTS OF JAPAN Bd. 007, Nr. 059 (M-199), 11. März 1983 (1983-03-11) & JP 57 205208 A (TOKICO KK), 16. Dezember 1982 (1982-12-16)
- PATENT ABSTRACTS OF JAPAN Bd. 014, Nr. 193 (M-0963), 19. April 1990 (1990-04-19) & JP 02 037011 A (MAZDA MOTOR CORP), 7. Februar 1990 (1990-02-07)

## Beschreibung

Die Erfindung betrifft eine Gasfeder für ein lenkbares Fahrzeugrad, mit den im Obergriff des Patentanspruches 1 angegebenen Merkmalen und geht aus von der FR-2 559 430 A.

In der EP-A-0 253 261 ist eine an einem vorderen Mc-Pherson-Federbein vorgesehene Luftfeder gezeigt, die von der Kolbenstange des Dämpfers durchsetzt und oben von einem festen Federtopf begrenzt ist. Seitlich an dem Federtopf ist ein Ventil angeordnet, durch das zur Regelung des Druckes im Innenraum der Gasfeder komprimierte Luft in den Innenraum einströmen oder aus dem Innenraum abströmen kann. An das Ventil dürfte sich ein Druckschlauch oder eine Rohrleitung anschließen. Das mit der Gasfeder versehene Fahrzeugrad kann neben etwa vertikalen Federungsbewegungen auch Lenkbewegungen etwa um die Achse der Gasfeder ausführen, so daß der Druckschlauch bzw. die Rohrleitung im Radhaus schleifenförmig verlegt sein dürfte, um diese Radbewegungen zu ermöglichen. Die Freigängigkeit des Fahrzeugrades bzw. der Radführungselemente sowie weiterer im Radhaus angeordneter Bauteile ist dadurch eingeschränkt und es kann nicht ausgeschlossen werden, daß bei diesen Federungs- bzw. Lenkbewegungen der Druckschlauch bzw. die Rohrleitung im Radhaus mit anderen Bauteilen, beispielsweise einem Bremsschlauch, einer Gelenkwelle bzw. einem Stabilisator oder mit von der Fahrbahn hochgeschleuderten Steinen, Ästen oder dergleichen in Kontakt kommt und dabei beschädigt wird oder störende Geräusche verursacht. Der Druckschlauch bzw. die Rohrleitung kann die Fahrtluft so im Radhaus verwirbeln, daß insbesondere bei höheren Fahrgeschwindigkeiten Luftgeräusche auftreten und/oder sich die Aerodynamik des Fahrzeugs verschlechtert.

Aus der FR-2 559 430 A ist eine Gasfeder für ein Fahrzeugrad bekannt, bei der der Druckschlauch bzw. die Rohrleitung zumindest bereichsweise über dem Boden des Federtopfes angeordnet ist, derart, dass die Rohrleitung einen radial nach außen gerichteten Bogen bildet, an den sich ein Ventil anschließt. Über den weiteren Verlauf der Rohrleitung ist dieser Schrift nichts zu entnehmen, insbesondere ist auch hierin nicht gezeigt, welche Maßnahme an einem lenkbaren Fahrzeugrad zu ergreifen ist, um die Rohrleitung geeignet zu führen.

Der Erfindung liegt die Aufgabe zugrunde, eine Gasfeder mit den Merkmalen in Oberbegriff des Patentanspruches 1 anzugeben, die den Freiraum im Radhaus nicht oder kaum einschränkt und besser vor Beschädigungen geschützt ist.

Diese Aufgabe ist durch die Merkmale im Patentanspruch 1 gelöst. Vorteilhafte Ausgestaltungen der Erfindung sind den Unteransprüchen entnehmbar.

Der im wesentlichen über dem Federtopf angeordnete Druckschlauch bzw. die Rohrleitung schränkt den Freiraum im Radhaus nicht ein und kann nicht an Gegenständen im Radhaus anschlagen und dabei beschädigt werden oder Geräusche verursachen. Bei Lenkbewegungen kann sich der Druckschlauch bzw. die Rohrleitung zumindest etwas elastisch verformen, wodurch die Lenkbewegungen des Fahrzeugrades nicht oder kaum eingeschränkt sind. Bei einer bevorzugten Ausgestaltung bildet der Druckschlauch bzw. die Rohrleitung über den Federtopf eine Schleife, die sich beispielsweise über einen geschlossenen Kreis oder etwas darüber hinaus erstreckt. Die Schleife erfordert lediglich einen geringen Platz über dem Federtopf, der durch einen ringförmigen Freiraum zwischen zwei Teilen oder in einem Teil gebildet sein kann, das mit dem Federtopf oder der Karosserie des Fahrzeugs verbunden ist. Der Druckschlauch bzw. die Rohrleitung kann beispielsweise von einem zylindrischen Wandbereich an einem karosseriefesten oder mit dem Federtopf verbundenen Teil zumindest bereichsweise abgedeckt sein, wodurch der Druckschlauch bzw. die Rohrleitung verdeckt und geschützt angeordnet ist.

Ein Ausführungsbeispiel der Erfindung wird anhand einer Zeichnung näher erläutert. Es zeigen
- Fig. 1: einen Längsschnitt durch die Gasfeder,
- Fig. 2: eine perspektivische Draufsicht auf den Federtopf und die darüber angeordnete Rohrleitung und
- Fig. 3: eine Fig. 2 entsprechende Ansicht mit dem über dem Federtopf und der Rohrleitung angeordneten Stützteil.

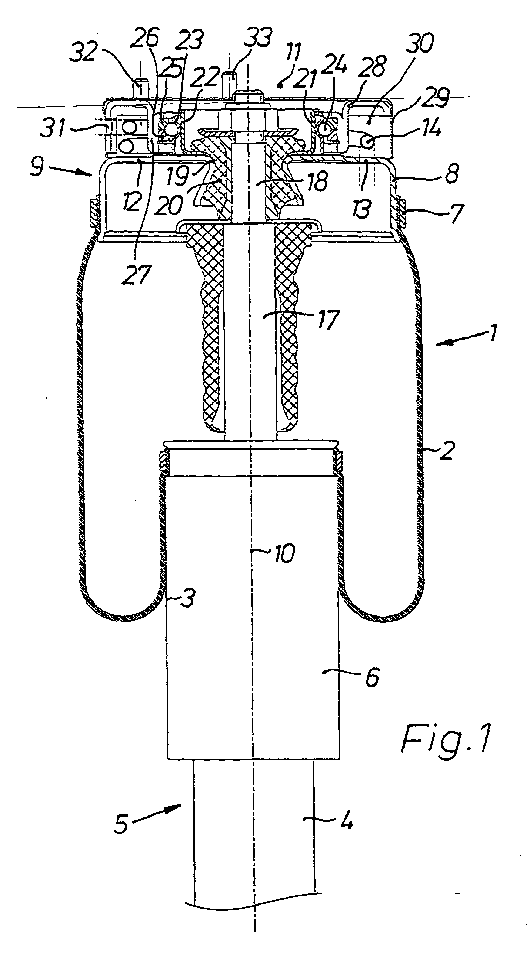

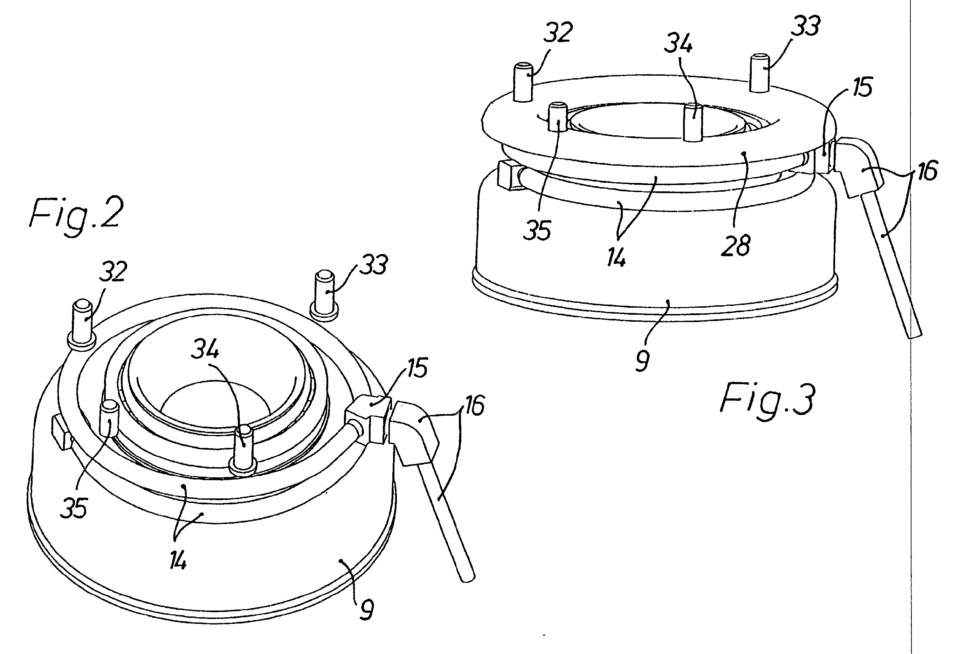

Die in Fig. 1 dargestellte Gasfeder 1 ist zur federnden Abstützung eines gelenkten Vorderrades an einem Kraftfahrzeug vorgesehen und weist einen innen über ein gasförmiges Medium, beispielsweise Luft, druckbelastbaren Rollbalg 2 auf, der sich mit seinem unten eingerollten Ende an einer Abrollfläche 3 abstützt, die durch ein Außenrohr 4 eines Dämpfers 5 oder ein damit verbundenes bzw. daran abgestütztes Teil 6 gebildet ist. Das obere Ende der Gasfeder 1 ist über einen Klemmring 7 oder dergleichen an der zylindrischen Wand 8 eines Federtopfes 9 befestigt, der etwa um die Achse 10 der Gasfeder 1 drehbar an der Karosserie 11 befestigt ist. Im Boden 12 des Federtopfes 9 ist eine axiale Einlaßöffnung 13 ausgebildet, an die direkt oder über ein Verbindungselement ein Ende einer Rohrleitung 14 angeschlossen ist. Die Rohrleitung 14 ist im wesentlichen über dem Boden 12 des Federtopfes 9 angeordnet und endet in einem in den Figuren 2 und 3 erkennbaren Koppelelement 15, das über dem Boden 12 des Federtopfes 9 an der Karosserie 11 des Kraftfahrzeugs befestigt ist und an dem radial von außen eine weitere Rohrleitung 16 oder ein Druckschlauch ankoppelbar ist, der mit einer Druckquelle verbunden und eventuell an ein oder mehreren Stellen an der Karosserie 11 abgestützt bzw. befestigt ist. Die Rohrleitung 16 führt bei Ein- oder Ausfederungsbewegungen und bei Lenkbewegungen des mit der Gasfeder 1 versehenen Fahrzeugrades keine Bewegungen aus und kann somit beispielsweise auf einem kurzen oder günstigsten Weg mit der Druckquelle verbunden sein. Wie Fig. 1 zu entnehmen ist, durchsetzt der Dämpfer 5 die Gasfeder 1 axial, von dem nach oben eine Kolbenstange 17 absteht, die am vorstehenden Endbereich 18 eine zentrale Öffnung 19 im Boden 12 des Federtopfes 9 durchsetzt und an diesem Endbereich 18 an einem in die Öffnung 19 eingerasteten elastischen Dichtkörper 20 abgestützt ist. An dem Boden 12 des Federtopfes 9 ist ein topfförmiges Lagerteil 21 befestigt, das eine nach oben vorstehende Zylinderwand 22 aufweist, an dem sich radial von außen ein Teil 23 eines Wälzlagers 24 abstützt, das sich mit zwei äußeren, axial hintereinander angeordneten Teilen 25, 26 an einer Zylinderwand 27 eines topfförmigen Stützteiles 28 abstützt, das mit der Karosserie 11 des Kraftfahrzeugs verbunden ist. Der Federtopf 9 ist dadurch direkt bzw. über ein im wesentlichen festes Lagerteil 21 an dem Teil 23 des Wälzlagers 24 abgestützt, das ebenfalls über ein im wesentlichen festes Stützteil 28 an der Karosserie 11 abgestützt ist. Fig. 1 ist noch zu entnehmen, daß das topfförmige Stützteil 28 in Verbindung mit dem zwischengelegten Abdecktopf 29 einen axial nach unten offenen Aufnahmeraum 30 bildet, in dem die Rohrleitung 14 aufgenommen ist, die in dem Aufnahmeraum 30 eine über den Umfang geschlossene Schleife bildet, die sich etwa über einen Umfangswinkel von 500 Grad erstreckt. Selbstverständlich kann die Schleife auch über einen größeren oder kleineren Umfangswinkel verlaufen. Die Rohrleitung 14 ist beispielsweise aus dem Kunstoff Polyamid (PA) gefertigt und kann sich somit bei Lenkbewegungen des Fahrzeuggrades in die eine oder andere Richtung elastisch verformen, beispielsweise indem sich der Durchmesser der Schleife in einem der Lenkbewegung entsprechenden Maß vergrößert oder verringert. In dem Abdecktopf 29 und/oder in dem Stützteil 28 ist eine radiale Öffnung 31 ausgebildet, durch die eine weitere, in den Figuren 2 und 3 dargestellte Rohrleitung 16 mit dem Koppelelement 15 im Aufnahmeraum 30 zu verbinden ist, das ein Ende der über dem Federtopf 9 angeordneten Rohrleitung 14 bildet. Die Gasfeder 1 und der Dämpfer 5 sind Teile eines Mc-Pherson-Federbeines, das als vormontierte Baueinheit gefertigt und über Schrauben 32, 33, 34 mit dem Boden eines karosseriefesten Federbeindomes zu verbinden ist.

Der perspektivischen Draufsicht gemäß Fig. 2 ist entnehmbar, daß die Rohrleitung 14 in einem radialen Abstand zur Achse der Gasfeder etwa kreisförmig verläuft, wobei der Anfangs- und der Endbereich der Rohrleitung 14 etwas axial zueinander versetzt sind.

In Fig. 3 ist noch das Stützteil 28 dargestellt, das über dem Federtopf 9 und der Rohrleitung 14 angeordnet ist und über die drei Schrauben 32, 33, 34 mit der Karosserie zu verbinden ist sowie über einen Zentrierstift 35 zentriert werden kann.

Anstelle einer Rohrleitung kann auch ein Druckschlauch oder dergleichen verwendet sein. Die Koppelstelle über dem Boden des Federtopfes kann auch entfallen, wenn die Rohrleitung bzw. der Druckschlauch aus dem Aufnahmeraum über dem Federtopf herausgeführt und an einer anderen Stelle mit einem wieteren Druckschlauch bzw. einer weiteren Rohrleitung oder eventuell direkt mit der Druckquelle verbunden ist. Es ist nicht erforderlich, daß der Druckschlauch oder die Rohrleitung wenigstens eine geschlossene Schleife bildet. Der Druckschlauch bzw. die Rohrleitung ist lediglich zumindest bereichsweise so über dem Federtopf anzuordnen, daß sich der Druckschlauch bzw. die Rohrleitung den Lenkbewegungen des Fahrzeugrades entsprechend zumindest so eventuell lediglich bereichsweise elastisch verformen kann, daß die Lenkbewegungen nicht behindert sind. Der Druckschlauch bzw. die Rohrleitung kann so verlegt sein, daß sich Bereiche des Druckschlauches bzw. der Rohrleitung berühren. Vorzugsweise ist jedoch der Druckschlauch bzw. die Rohrleitung so zumindest etwas steif ausgebildet, daß sich Bereiche des Druckschlauches bzw. der Rohrleitung nicht berühren und auch nicht mit Wänden des Aufnahmeraumes in Kontakt gelangen.

## Patentansprüche

1. Gasfeder (1) für ein lenkbares Fahrzeugrad, mit einem innen über ein gasförmiges Medium druckbelastbaren Rollbalg (2), der sich mit seinem unten eingerollten Ende an einer Abrollfläche (3) an einem Radträger oder Radführungselement bzw. an einem damit verbundenen Teil abstützt, wobei das obere Ende des Rollbalges (2) an einem Federtopf (9) befestigt ist, der etwa um die Achse (10) der Gasfeder (1) drehbar an der Karosserie des Fahrzeugs befestigt ist und eine Einlaßöffnung (13) aufweist, an die ein Druckschlauch oder eine Rohrleitung (14) angeschlossen ist, wobei der Druckschlauch oder die Rohrleitung (14) zumindest bereichsweise über dem Boden (12) des Federtopfes (9) angeordnet ist,
**dadurch gekennzeichnet, dass** der über dem Boden (12) des Federtopfes (9) befindliche Abschnitt des Druckschlauchs oder der Rohrleitung (14) in Form einer Schleife bezüglich der Achse (10) verläuft und sich bei Drehbewegungen des Federtopfes (9) zumindest bereichsweise elastisch verformen kann.

2. Gasfeder nach Anspruch 1,
**dadurch gekennzeichnet, daß** die Schleife in einem radialen Abstand zur Achse (10) der Gasfeder (1) etwa kreisförmig verläuft.

3. Gasfeder nach Anspruch 1 oder 2,
**dadurch gekennzeichnet, daß** die Einlaßöffnung (13) im Boden (12) des Federtopfes (9) ausgebildet ist.

4. Gasfeder nach einem der Ansprüche 1 bis 3,
**dadurch gekennzeichnet, daß** der Druckschlauch bzw. die Rohrleitung (14) an einem von der Einlaßöffnung (13) abgewandten Bereich etwa über dem Federtopf (9) an einer karosseriefesten Stützstelle abgestützt ist.

5. Gasfeder nach einem der Ansprüche 1 bis 4,
**dadurch gekennzeichnet, daß** die karosseriefeste Stützstelle von einem mit der Karosserie (11) verbundenen Koppelelement (15) gebildet ist, an dem der Druckschlauch bzw. die Rohrleitung (14) endet und an der ein weiterer Druckschlauch oder eine weitere Rohrleitung (16) ankoppelbar ist.

6. Gasfeder nach Anspruch 5, mit einem über dem Federtopf angeordneten Stützteil, das mit der Karosserie des Fahrzeugs verbunden ist und den Federtopf etwa um die Achse der Gasfeder drehbar stützt,
**dadurch gekennzeichnet, daß** entweder das Stützteil (28) und/oder ein karosseriefester Abdecktopf (29), der axial vor oder hinter dem Stützteil (28) angeordnet ist, einen Aufnahmeraum (30) für den Druckschlauch bzw. die Rohrleitung (14) bilden.

7. Gasfeder nach Anspruch 6,
**dadurch gekennzeichnet, daß** das Stützteil (28) und/oder der Abdecktopf (29) mit einer etwa zylindrischen Mantelfläche den Druckschlauch bzw. die Rohrleitung (14) von außen abdeckt und eine radiale Öffnung (31) aufweist, durch die entweder ein Bereich des Druckschlauches bzw. der Rohrleitung oder ein mit dem Druckschlauch bzw. der Rohrleitung (14) verbindbarer weiterer Druckschlauch bzw. eine damit verbindbare weitere Rohrleitung (16) verläuft.

8. Gasfeder nach einem der Ansprüche 1 bis 9,
**dadurch gekennzeichnet, daß** die Gasfeder (1) axial von einem Dämpfer (5) durchsetzt ist, der an seinem Außenrohr (4) die Abrollfläche (3) bildet oder ein Teil stützt, an dem die Abrollfläche ausgebildet ist und eine nach oben vorstehende Kolbenstange (17) aufweist, die sich in einer etwa zentralen Öffnung (19) im Boden (12) des Federtopfes (9) an einem elastischen Dichtkörper (20) abstützt.

9. Gasfeder nach einem der Ansprüche 6 bis 8,
**dadurch gekennzeichnet, daß** sich der Federtopf (9) direkt oder über im wesentlichen feste Zwischenteile (Lagerteil 21) an einem Teil (23) eines Wälzlagers (24) abstützt, das sich mit einem anderen Teil (25, 26) direkt oder über im wesentlichen feste Bauteile (Stützteil 28) an der Karosserie (11) des Fahrzeugs abstützt.

## Claims

1. A gas spring (1) for a steerable vehicle wheel, with bellows (2) which can be pressure-loaded on the inside via a gaseous medium, which are supported by their end, which is rolled in at the bottom, on a rolling surface (3) on a wheel carrier or wheel guiding element or on a part connected therewith, wherein the upper end of the air bellows (2) is fastened to a spring cup (9), which is fastened to the body of the vehicle so as to be rotatable about the axis (10) of the gas spring (1) and has an inlet opening (13), to which a pressure hose or a pipe (14) is connected, the pressure hose or pipe (14) being arranged at least in regions over the base (12) of the spring cup (9), **characterised in that** the section of the pressure hose or pipe (14) located over the base (12) of the spring cup extends in the form of a loop with respect to the axis (10) and may deform elastically at least in regions on rotational movements of the spring cup (9).

2. A gas spring according to claim 1, **characterised in that** the loop extends approximately circularly at a radial spacing from the axis (10) of the gas spring (1).

3. A gas spring according to claim 1 or 2, **characterised in that** the inlet opening (13) is formed in the base (12) of the spring cup (9).

4. A gas spring according to any one of claims 1 to 3, **characterised in that** the pressure hose or the pipe (14) is supported on a region remote from the inlet opening (13) approximately over the spring cup (9) on a support point secured to the body.

5. A gas spring according to any one of claims 1 to 4, **characterised in that** the support point secured to the body is formed by a coupling element (15) connected to the body (11), on which coupling element the pressure hose or pipe (14) ends and to which pipe a further pressure hose or a further pipe (16) can be coupled.

6. A gas spring according to claim 5, comprising a support part which is arranged over the spring cup, and is connected to the body of the vehicle and rotatably supports the spring cup approximately about the axis of the gas spring, **characterised in that** either the support part (28) and/or a covering cup (29) secured to the body, which cup is arranged axially in front of or behind the support part (28), form a receiving space (30) for the pressure hose or the pipe (14).

7. A gas spring according to claim 6, **characterised in that** the support part (28) and/or the covering cup (29) cover the pressure hose or the pipe (14) from the outside with an approximately cylindrical lateral surface, and have a radial opening (31), through which either a region of the pressure hose or the pipe or a further pressure hose which can be connected to the pressure hose or line (14) or a further pipe(16) which can be connected thereto, runs.

8. A gas spring according to any one of claims 1 to 9, **characterised in that** the gas spring (1) is axially penetrated by a damper (5), which forms, at its outer pipe (4), the rolling surface (3) or supports a part on which the rolling surface is formed and has an upwardly projecting piston rod (17), which is supported in an approximately central opening (19) in the base (12) of the spring cup (9) on an elastic sealing body (20).

9. A gas spring according to any one of claims 6 to 8, **characterised in that** the spring cup (9) is supported directly or via substantially rigid intermediate parts (bearing part 21) on a part (23) of a roller bearing (24), which is supported by another part (25, 26), directly or via substantially rigid components (support part 28) on the body (11) of the vehicle.

## Revendications

1. Ressort à gaz (1) pour une roue directrice de véhicule, avec un soufflet en U (2) mis sous pression à l'intérieur au moyen d'un fluide gazeux, qui s'appuie par son extrémité inférieure enroulée sur une surface de déroulement (3) sur un support de roue ou un élément de guidage de roue ou sur une pièce reliée à celui-ci, l'extrémité supérieure du soufflet en U (2) étant fixée sur une coupelle de ressort (9) fixée sur la carrosserie du véhicule, de façon rotative par exemple autour de l'axe (10) du ressort à gaz (1), et qui présente une ouverture d'entrée (13) à laquelle un flexible sous pression ou un tube (14) est raccordé, le flexible sous pression ou le tube (14) étant disposé au moins en certaines zones au-dessus du fond (12) de la coupelle de ressort (9),
**caractérisé en ce que**
le segment du flexible sous pression ou du tube (14) situé au-dessus du fond (12) de la coupelle de ressort (9) est disposé en forme de boucle par rapport à l'axe (10) et peut se déformer élastiquement, tout au moins en certaines zones, pendant les mouvements de rotation de la coupelle de ressort (9).

2. Ressort à gaz selon la revendication 1,
**caractérisé en ce que**
la boucle est disposée par exemple de façon circulaire à une distance radiale par rapport à l'axe (10) du ressort à gaz (1).

3. Ressort à gaz selon la revendication 1 ou 2,
**caractérisé en ce que**
l'ouverture d'entrée (13) est formée dans le fond (12) de la coupelle de ressort (9).

4. Ressort à gaz selon l'une des revendications 1 à 3,
**caractérisé en ce que**
le flexible sous pression ou le tube (14) est appuyé sur un emplacement d'appui solidaire de la carrosserie, contre une zone opposée à l'ouverture d'entrée (13) par exemple au-dessus de la coupelle de ressort (9).

5. Ressort à gaz selon la revendication 4,
**caractérisé en ce que**
l'emplacement d'appui solidaire de la carrosserie est formé par un élément de couplage (15) relié à la carrosserie (11), sur lequel le flexible sous pression et le tube (14) se termine et auquel un autre flexible sous pression ou un autre tube (16) peut être couplé.

6. Ressort à gaz selon la revendication 5, comportant au-dessus de la coupelle de ressort, une pièce d'appui reliée à la carrosserie du véhicule et qui soutient la coupelle de ressort de manière rotative par exemple autour de l'axe du ressort à gaz,
**caractérisé en ce que**
la pièce d'appui (28) et/ou une coupelle de recouvrement (29) solidaire de la carrosserie, et disposée axialement en avant ou en arrière de la pièce d'appui (28), forment un espace de réception (30) pour le flexible sous pression ou le tube (14).

7. Ressort à gaz selon la revendication 6,
**caractérisé en ce que**
la pièce d'appui (28) et/ou la coupelle de recouvrement (29) recouvrent de l'extérieur, par une surface d'enveloppe par exemple cylindrique, le flexible sous pression ou le tube (14), et présentent une ouverture radiale (31) à travers laquelle passe une zone du flexible sous pression ou du tube ou un autre flexible sous pression reliable avec le flexible sous pression ou le tube (14) ou un autre tube (16) reliable avec celui-ci.

8. Ressort à gaz selon l'une des revendications 1 à 9,
**caractérisé en ce que**
le ressort à gaz (1) est traversé axialement par un amortisseur (5) qui forme sur son tube extérieur (4) la surface de déroulement (3) ou qui soutient une pièce sur laquelle la surface de déroulement est formée, et présente une tige de piston (17) faisant saillie vers le haut, qui s'appuie dans une ouverture (19) par exemple centrale dans le fond (12) de la coupelle de ressort (9) contre un corps d'étanchéité (20) élastique.

9. Ressort à gaz selon l'une des revendications 6 à 8,
**caractérisé en ce que**
la coupelle de ressort (9) s'appuie directement ou au moyen de pièces intermédiaires (pièce de logement 21), pour l'essentiel fixes, contre une partie (23) d'un palier à roulement (24) qui s'appuie, par une autre partie (25, 26) directement ou au moyen de composants pour l'essentiel fixes (pièce d'appui 28) contre la carrosserie (11) du véhicule.
